Europäisches Patentamt

European Patent Office

Office européen des brevets

(11) Publication number: **0 051 703**
**B1**

# EUROPEAN PATENT SPECIFICATION

(45) Date of publication of patent specification: **21.08.85**

(21) Application number: **80303998.1**

(22) Date of filing: **07.11.80**

(51) Int. Cl.⁴: **F 01 D 1/36**, F 03 G 7/04, F 01 D 9/04

(54) Geothermal turbine and method of using same.

(43) Date of publication of application:
**19.05.82 Bulletin 82/20**

(45) Publication of the grant of the patent:
**21.08.85 Bulletin 85/34**

(84) Designated Contracting States:
**AT BE CH DE FR GB IT LI LU NL SE**

(56) References cited:
GB-A- 982 578
US-A-2 739 782
US-A-2 976 013
US-A-3 232 581
US-A-3 243 159
US-A-3 495 921
US-A-3 905 196
US-A-4 112 745
US-A-4 215 976

(73) Proprietor: **Possell, Clarence R.**
**4842 Viane Way**
**San Diego California 92110 (US)**

(72) Inventor: **Possell, Clarence R.**
**4842 Viane Way**
**San Diego California 92110 (US)**

(74) Representative: **Boydell, John Christopher**
**Stevens, Hewlett & Perkins 5 Quality Court**
**Chancery Lane**
**London, WC2A 1HZ (GB)**

Courier Press, Leamington Spa, England.

## Description

The present invention relates to a geothermal turbine and method of using same.

Prior to the present invention the use of geothermal energy has been limited to those areas that produce dry super heated steam. Such areas are extremely limited in number. In geothermal areas where dry super heated steam is available conventional turbines may be used to produce power.

In most geothermal areas the hot pressurized fluid produced from bore holes is of the multiphase type, that is, the fluid is a mixture of steam, droplets of entrained water, and also finely particled solid materials. If such hot pressurized fluid is to be used for power producing purposes with a conventional turbine the entrained droplets of water and particles of solid materials must first be removed therefrom. Removal of the droplets of water results in the loss of their heat energy as well as the kinetic energy they possess. Furthermore, the removal of the droplets of water results in loss of heat on the pressurized fluid. The use of a mixture of steam and entrained droplets of water for power producing purposes with conventional turbines results in the blades of the latter being eroded in a relatively short time.

From the above comments it will be apparent that the greatest amount of power could be produced if the entire effluent could be used for not only does the steam possess kinetic energy but this is equally true of the entrained droplets of water. In attempting to use hot pressurized fluid of a multiphase nature a major problem is to select a turbine nozzle that may be used effectively on the widely varying effluents one encounters not only in different geothermal areas, but from different wells in the same area.

U.S.—A—3 232 581 describes a radial turbine in which pressurized fluid enters through inlet nozzles which are such as to enable the flow of fluid to be varied by altering the cross sectional area of the inlet nozzles. U.S.—A—4 112 745 describes a geothermal energy system including a power turbine which is connected to rotate an electric power generator, and includes an arrangement for using flashed steam obtained from the hot geothermal liquid output from the well.

The present invention seeks to provide a turbine in which first and second spaced discs on opposite sides of a circular rotor are concurrently subjected to jets of heated pressurized geothermal fluid from a number of circumferentially spaced overlapping nozzles that not only cooperate with a housing to define a circular ring-shaped space into which the effluent is discharged, but with the nozzle being of such structure as to be adjustable as to the relative dimensions of the convergent sections, the throats and the divergent sections thereof to obtain jets of pressurized fluid that are at maximum velocity when they are directed tangentially into the spaces between the discs.

According to a first aspect of the invention there is provided a geothermal turbine assembly of the type that includes a housing that defines a confined space, a shaft rotatably supported in said housing and extending transversely through said confined space; a plurality of spaced discs supported from said shaft in said confined space; inlet means in an outer portion of said housing through which a pressurized and heated multiphase fluid from a geothermal source may be discharged, said fluid including steam and droplets of water, and discharge means in said housing through which said multiphase fluid may flow after traversing a spiral path in said spaces to impart rotational power to said shaft due to the loss of kinetic energy to said plurality of spaced discs, said turbine assembly being characterized in that the turbine is a centripetal flow turbine, said plurality of discs having a plurality of transversely aligned centre openings therein, said discs being of substantially smaller diameter than that of said confined space; and in that the inlet vane system of said turbine consists of:

(a) a plurality of elongate nozzle members disposed in overlapping relationship in said housing exteriorly of said discs, each pair of said members co-operating to define a converging space, a throat, and a diverging space therebetween, said converging spaces being in communication with said multiphase fluid discharged into said confined space, and said diverging spaces being substantially tangentially disposed relative to the outer periphery of said discs;

(b) first means for pivotally supporting said nozzle members from said housing to permit the transverse cross-sections of said converging spaces, throats, and diverging sections to be varied to positions where said multiphase fluid discharges from said diverging openings at maximum velocity for a particular multiphase fluid of known pressure and temperature; and

(c) second means for removably locking said nozzle members in fixed positions relative to one another after said nozzle bodies have been pivoted to positions where said multiphase fluid discharges at said maximum velocity from said diverging spaces.

According to a second aspect of the invention there is provided a geothermal turbine assembly for use with at least one first bore hole that extends to a geothermal formation from which a heated, pressurized multiphase fluid discharges that contains both steam and droplets of water entrained therewith and a second bore hole through which said fluid may be returned to said geothermal formation, said geothermal turbine assembly having a housing, first and second bearing assemblies that are axially aligned and centered relative to said housing, said first bearing assembly being supported on the interior of said shell, a shaft that is rotatably supported by said first and second bearing assemblies and a power take-off on said shaft exteriorly of said housing and shell, said assembly being characterized in that the second bearing assembly is supported from an upright in that the shaft is cantilevered and in that the assembly further comprises:

a. a housing that includes first and second laterally spaced side pieces and an end piece extending therebetween, said first and second side pieces and end piece defining a confined space therein; a circular rib that is centered on said end piece and extends inwardly therefrom to subdivide said confined space into first and second outwardly disposed ring-shaped spaces; an inlet in said end piece in communication with said first bore hole and said first and second ring-shaped spaces; and first and second fluid discharge openings that are centered in said first and second side pieces;

b. a hollow shell secured to said first side piece that extends over said discharge opening;

c. a base that supports said hollow shell and said housing thereabove;

d. a rotor plate secured to said shaft and disposed in said housing in vertical alignment with said rib;

e. first and second sets of spaced discs secured to opposite sides of said rotor plate and vertically aligned with said first and second ring-shaped spaces, said first and second sets of discs having first and second centered openings therein;

f. a plurality of elongate nozzle bodies disposed as first and second sets in said first and second ring-shaped spaces;

g. first means for pivotally supporting said nozzle bodies to permit each of said pairs thereof to define a converging space, a throat, and a diverging space therebetween, said converging space in communication with said ring-shaped space most adjacent thereto, and said diverging space substantially tangentially disposed relative to the outer periphery of one of said discs, and each of said pairs of nozzle bodies capable of being pivotally adjusted so that the transverse cross-section of said converging and diverging spaces and said throat are so related that a jet of said fluid discharges onto one of said sets of discs at maximum velocity for the particular multiphase pressurized and heated fluid being used from said first bore hole;

h. second means for locking said nozzle bodies in positions to produce said jets of fluid at said maximum velocity, said jets entering said spaces between said discs to impart rotational motion thereto as said jets lose velocity and increase in pressure to pursue spiral paths relative to said discs and discharge through said first and second openings therein and through said first and second discharge openings in said first and second side pieces;

i. a first conduit connected to the interior of said shell, a second conduit connected to said second discharge opening in said second side piece, and said first and second conduits merging into a third conduit that intends to said second bore hole to return said fluid to said geothermal formation; and

j. sealing means that separate said confined space from said first and second discharge openings in said first and second side pieces.

In order that the invention may be better understood, an embodiment thereof will now be described by way of example only and with reference to the accompanying drawings in which:

FIG. 1 is a perspective view of the geothermal turbine;

FIG. 2 is a vertical cross sectional view of the geothermal turbine taken on the line 2—2 of FIG. 1;

FIG. 3 is a vertical cross sectional view of the turbine taken on the line 3—3 of FIG. 2;

FIG. 4 is a fragmentary enlarged side elevational view of the adjustable nozzle bodies; and

FIG. 5 is a diagrammatic view of the geothermal turbine in use in producing power from a geothermal source where the effluent is of a multiphase nature and contains steam, droplets of water, and in some instances particles of entrained solids.

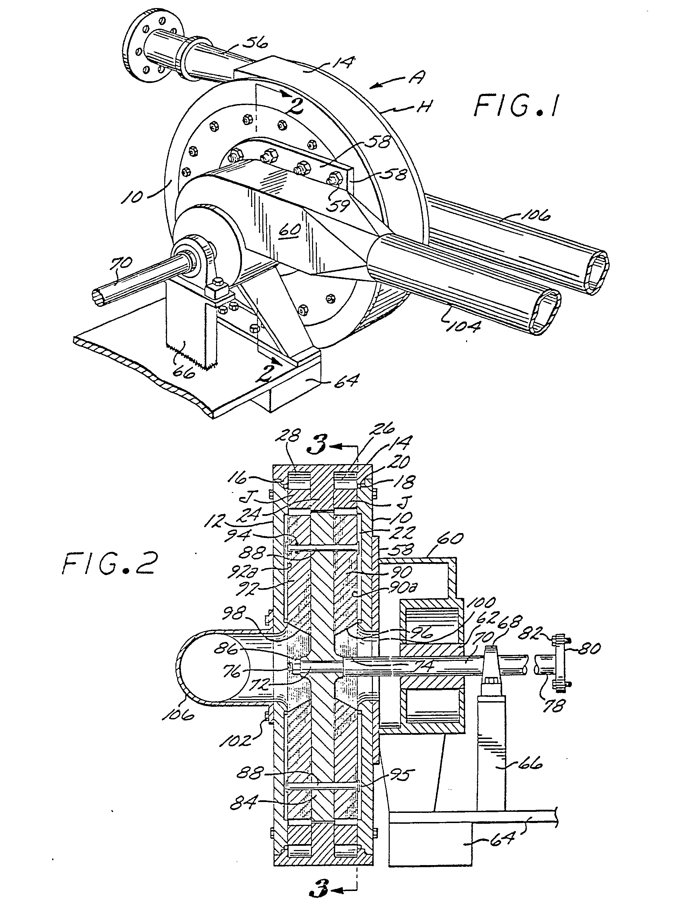

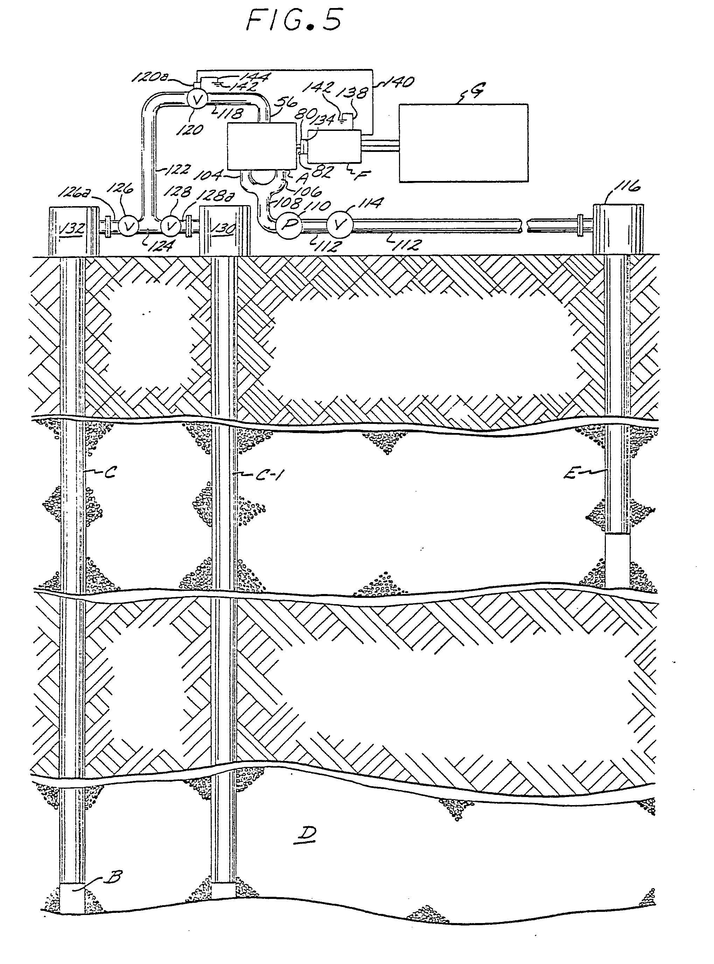

The geothermal turbine A as shown in FIG. 1 is illustrated in FIG. 5 as being powered by heated and pressurized multiphase effluent B that discharges from either a first bore hole C or second bore hole C-1, which bore holes are in communication with a geothermal formation D. A third bore hole E is provided into which geothermal effluent is discharged after flowing through the turbine A to again be returned to the geothermal formation D. The turbine A as can be seen in FIG. 5 is utilized in driving an electric generator F, with power generated in this manner flowing to a transformer G.

Geothermal turbine A is illustrated in FIG. 1 as including a housing H that has a first circular side piece 10 and second circular side piece 12, and a circular end piece 14 that extends therebetween. The circular end piece 14 as shown in FIG. 2 includes a pair of laterally spaced inwardly extending tongues 16 that engage circular recesses 18 formed in the first and second end pieces 10 and 12. A pair of circular sealing rings 20 are disposed in the recesses 18 and are in pressure sealing contact with the tongues 16. The first and second side pieces 10 and 12 cooperate with the end piece 14 to define a confined space 22.

A centrally disposed rib 24 extends inwardly from the end piece 14 and subdivides the confined space 22 on the outer peripheral portion thereof into first and second ring-shaped spaces 26 and 28. Each of the first and second ring-shaped spaces 26 and 28 has a number of elongate nozzle bodies J disposed therein in overlapping relationship with each nozzle body preferably being formed from a plate of steel or other rigid material.

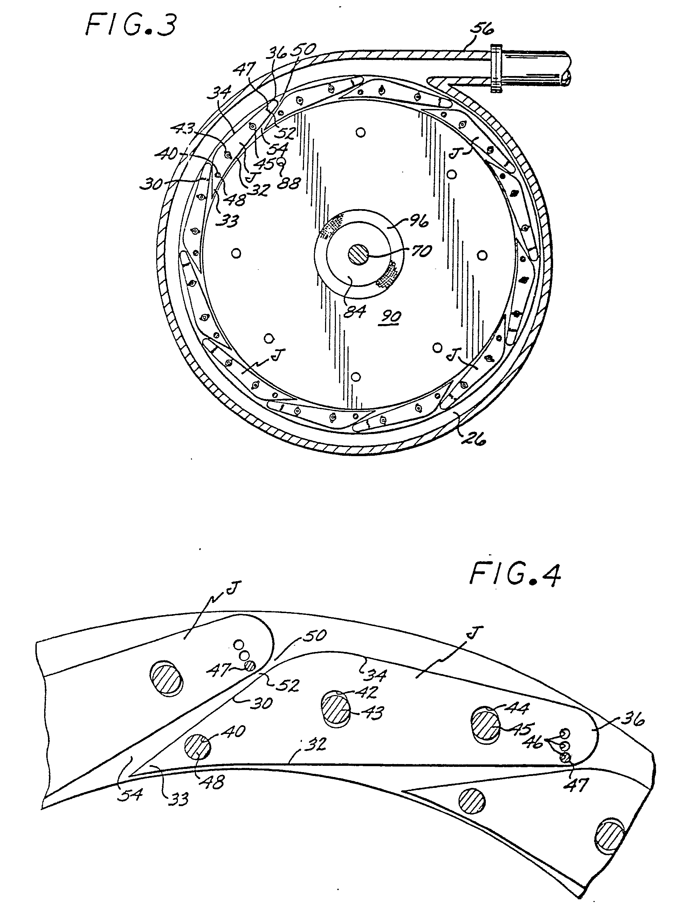

Each of the nozzle bodies J includes a forward edge surface 30, bottom edge surface 32, top edge surface 34, rearward edge surface 36, and the forward and bottom edge surfaces merging to define an apex 33 as may best be seen in FIG. 4. The bottom edge surface 32 adjacent the apex 33 as may be seen in FIG. 4 is slightly concave.

Each of the nozzle bodies J adjacent the apex 33 thereof has a transverse bore 40 formed therein, and the nozzle body also having longitudinally spaced first and second transverse slots 42 and 44 therein. A number of pins 48 extend transversely between the rib 24 and the side pieces 10 and 12, with the pins 48 serving to pivotally support the nozzle bodies J.

Each of the nozzle bodies J has a first and second slot 42 and 44 therein engaged by first and second elongate members 43 and 45 that extend between the rib 24 and the side pieces 10 and 12. The first and second members 43 and 45 are preferably of transverse circular cross section. The length of the first and second slots 42 and 44 limits the degree to which each of the nozzle bodies J may be pivoted on the pin 48 associated therewith.

Each of the nozzle bodies J adjacent the rearward edge surface 36 has a number of spaced apertures 46 therein, any one of which may be aligned with a pair of transverse openings in the rib 24 and side piece 10 or 12, and so aligned be engaged by a dowel pin 47 that serves to hold the nozzle body in a desired adjusted angular position between the rib 24 and first or second side piece 10 or 12, and in one of the ring-shaped spaces 26 or 28. In FIG. 4 it will be seen that each pair of nozzle bodies J cooperate to define a converging space 50, throat 52, and diverging space 54 therebetween.

In FIGS. 1 and 5 it will be seen that the turbine A includes a multiphase fluid inlet 56 that is in communication on the forward end thereof with the first and second ring-shaped spaces 26 and 28, and the fluids discharged into these ring-shaped spaces flows therefrom through the converging spaces 50, throat 52, and diverging spaces 54.

The first side piece 10 as best seen in FIGS. 1 and 2 has a plate 58 secured thereto by bolts 59 or other fastening means, with the plate supporting an outwardly extending hollow shell 60, which shell has a first bearing structure 62 centrally disposed therein.

The turbine A includes a base 64 as best seen in FIGS. 1 and 2 that has an upright 66 supported thereon, with the upright on the upper extremity thereof supporting a second bearing structure that is aligned with the first bearing structure 62. A transversely extending substantially horizontal shaft 70 is rotatably supported in the first and second bearing structure 62 and 68 as shown in FIG. 2, with the shaft including a first end portion 72 of reduced diameter that forms a body shoulder 74 at a junction with the shaft 70. The shaft 70 includes a second end 78 best seen in FIG. 2 that supports a flange 80 through which bolts 82 extend to provide a power take-off.

A heavy circular rotor plate 84 of substantial thickness and formed from a rigid material such as steel or the like is provided, which rotor plate 84 as may be seen in FIG. 2 has a central thickened hub portion that is mounted on the first end portion 72 of shaft 70 in abutting contact with body shoulder 74, and a nut 86 being provided that threadedly engages threads 76 on the end portion 72. The rotor plate 84 is gripped between the body shoulder 74 and nut 86 and is held in a non-rotatable position relative to the shaft 70. The rotor plate 84 is of such diameter that the outer circumferential surface thereof is closely disposed to the interior surface of the rib 24 as may be seen in FIG. 2. The rotor plate 84 supports a number of circumferentially spaced transverse pins 88 that extend outwardly from opposite sides of the rotor plate and the pins serving as mountings for a first and second set of spaced discs 90 and 92, with the discs in each set being separated by transverse spaces 90a and 92a. The pins 88 have a number of space washers 94 mounted thereon with each of the washers being in abutting contact with two of the discs, to define one of the spaces 90a or 92a therebetween. The discs 90 and 92 are held on the transverse pins 88 by nuts 95 or other suitable fastening means that engage the ends of the pins as may be seen in FIG. 2.

The first and second sets of discs 90 and 92 have first and second fluid discharge openings 96 and 98 formed therein, which openings taper outwardly in opposite directions, and are in communication with first and second transverse openings 100 and 102 formed in the first side piece 10 and second side piece 12. A first fluid discharge conduit 104 is provided that is connected to the interior of the shell 60, and a second fluid discharge conduit 106 is also provided that is in communication with the second opening 102 in the second side piece 12.

The first and second fluid discharge conduits 104 and 106 merge into a third conduit 108 at some distance from the turbine A, with the third conduit being connected to the suction side of a power-driven pump 110 that has the discharge thereof connected to a fourth conduit 112 as shown in FIG. 5. Fourth conduit 112 is connected to a valve 114, which valve has the discharge side thereof connected to a continuation of the fourth conduit 112 that extends to a fitting 116. The fitting 116 is in communication with the third bore hole E.

Fluid inlet 56 is connected to a conduit 118 that extends to a solenoid operated valve 120, which valve has a conduit 122 extending therefrom to a tee 124. The tee 124 is connected to first and second valves 126 and 128 which by conduits 126a and 128a are connected to first and second fittings 130 and 132 that are in communication with the first and second bore holes C and C-1.

The power take-off flange 80 is connected by bolts 82 to a rotatable flange 134 that forms a part of an electric generator F, that delivers electric power to a transformer G. The generator F when the voltage being generated exceeds a predetermined maximum causes an electric current to flow through conductors 138 and 140. Conductor 138 extends to ground 142 and conductor 140 to solenoid 120a of valve 120. Solenoid 120a has a conductor 144 extending therefrom to ground 142. Completion of an electric circuit to solenoid 120a results in the latter being energized to close valve 120. When the voltage being generated by generator F drops below the predetermined maximum the generator F ceases discharging an electric current to solenoid 120a, and the valve 120 by spring means (not shown) that forms a part thereof return the valve to an open position to permit pressurized effluent to flow to turbine H.

Prior to discharging the pressurized effluent from the bore holes C and C-1 to the turbine A, the temperature of the effluent, the pressure and temperature thereof are determined, as well as the percentage by weight of entrained material such as droplets of water and particles of solid material.

In FIG. 3 it will be seen that the transverse cross-section of the ring-shaped space 26 progressively decreases as it moves away from the inlet 56 in order that pressurized effluent will be delivered to each of the converging spaces 56 at substantially the same pressure. Second ring-shaped space 28 likewise progressively decreases in transverse cross section.

For each individual pressurized effluent that will be encountered from well bores C and C-1, the pressure thereof as it flows through the throats 52 will bear a definite and constant relation to the initial pressure of the effluent in the ring-shaped spaces 26 and 28, providing the back (or discharge) pressure does not exceed the throat pressure. The throat pressure which satisfies these conditions is termed the critical pressure. If the back pressure exceeds the critical pressure, the divergent space 54 serves no useful function. Therefore, to obtain discharge of the effluent onto the first and second sets of discs 90 and 92 at maximum velocity, the nozzle bodies J are pivotally adjusted relative to one another to so vary the ratio of the transverse cross-sections of the throats 52 to the diverging spaces 54 that the back pressure does not exceed the critical pressure.

The pressurized effluent as it discharges into the turbine A from inlet 56 is subdivided into two streams that flow through the first and second ring-shaped spaces 26 and 28, with the heat content of the pressurized effluent being partially converted to kinetic energy as it flows relative to the first and second sets of discs 90 and 92 prior to discharge through first and second conduits 104 and 106. To obtain maximum conversion of the heat content of the pressurized effluent to kinetic energy, the nozzle bodies J are so adjusted that the discharge of the effluent from the diverging spaces 56 is at a maximum velocity. The portion of the pressurized effluent that is in the form of vapor or steam will impart kinetic energy to the first and second sets of discs 90 and 92, but this will also be true of the entrained material such as droplets of water and solid particles.

The portion of the pressurized effluent that is in the form of steam or vapor as it flows through the first and second sets of spaces 90a and 92a loses velocity due to frictional contact with the first and second sets of discs 90 and 92. Droplets of water and solid particles entrained with the steam or vapor have kinetic energy which is transferred to the moving streams of steam and vapor as the latter slow down in moving through the spaces 90a and 92a. This transferred kinetic energy causes the streams of steam and vapor to increase in velocity and the streams at increased velocity exerting an increased drag on the first and second sets of discs 90 and 92 to power rotate the same. Thus, although the solid and liquid phase of the pressurized effluent does not physically contact the first and second sets of discs 90 and 92 due to the discs having a boundary layer of effluent thereon that protects them from abrasive contact with the liquid and solid phase, the kinetic energy of the solid and liquid phase is transferred to the first and second sets of discs 90 and 92.

The use and operation of the invention has been explained previously in detail and need not be repeated.

There has been described a turbine that has a minimum lateral force exerted on its rotor plate and its first and second sets of discs due to the fluid exerting equal and opposite forces on the first and second sets of discs prior to flowing through openings in the centre thereof to be returned to a bore hole that extends to the geothermal zone.

The turbine is quiet in operation, and is not damaged by entrained liquid and solid particles in the effluent, for due to the boundary layer of effluent on adjoining surfaces of the discs, the liquid and solid particles do not come into contact with these surfaces as the effluent loses kinetic energy in flowing between the discs in spiral paths.

## Claims

1. A geothermal turbine assembly of the type that includes a housing (H) that defines a confined space (22), a shaft (70) rotatably supported in said housing and extending transversely through said confined space; a plurality of spaced discs (90, 92) supported from said shaft in said confined space; inlet means (56) in an outer portion of said housing through which a pressurized and heated multiphase fluid from a geothermal source may be discharged, said fluid including steam and droplets of water, and discharge means (104, 106) in said housing through which said multiphase fluid may flow after traversing a spiral path in said spaces to impart rotational power to said shaft due to the loss of kinetic energy to said plurality of spaced discs, said turbine assembly being characterized in that the turbine is a centripetal flow turbine, said plurality of discs having a plurality of transversely aligned centre openings (96, 98) therein, said discs being of substantially smaller diameter than that of said confined space; and in that the inlet vane system of said turbine consists of:

(a) a plurality of elongate nozzle members (J) disposed in overlapping relationship in said housing exteriorly of said discs, each pair of said members cooperating to define a converging space (50), a throat (52), and a diverging space (54) therebetween, said converging spaces being in communication with said multiphase fluid discharged into said confined space, and said diverging spaces being substantially tangentially disposed relative to the outer periphery of said discs;

(b) first means (48) for pivotally supporting said nozzle members from said housing to permit the transverse cross-sections of said converging spaces, throats, and diverging sections to be varied to positions where said multiphase fluid discharges from said diverging openings at maximum velocity for a particular multiphase fluid of known pressure and temperature; and

(c) second means (47) for removably locking said nozzle members in fixed positions relative to one another after said nozzle bodies have been pivoted to positions where said multiphase fluid discharges at said maximum velocity from said diverging spaces.

2. A turbine assembly as defined in Claim 1 in which first and second bore holes (B, E) extend to a geothermal formation, and said first bore hole being in communication with said inlet means (56) and supplying said pressurized and heated multiphase fluid to said confined space, and said turbine assembly in addition including:

d. a conduit (112) connected to said discharge means (104, 106) and extending to said second bore hole through which said fluid flows to be returned to said geothermal formation.

3. A turbine assembly as defined in Claim 2 which in addition includes:

e. a power driven pump (110) in said conduit intermediate said discharge means and said second bore hole (E) for discharging said multiphase fluid to said second bore hole and for maintaining a minimum pressure in said confined space adjacent said discharge means.

4. A turbine assembly as defined in Claim 2 which in addition includes:

f. rotatable electrical generating means (F) connected to said shaft for generating electric power as said shaft rotates.

5. A turbine assembly as defined in Claim 1 which in addition includes:

g. a plate (84) rigidly secured to said shaft (72) and centered in said confined space; and

h. first means (88) that support said plurality of discs as first and second sets of equal number on opposite sides of said plate, with both said sets in communication with said multiphase fluid discharged into said confined space through said inlet opening and said discharge means being first and second openings (100, 102) on opposite portions of said housing through which said multiphase fluid flows after discharging through said centered openings in said first and second sets of plates, and said shaft being subject to substantially no longitudinal thrust due to said multiphase fluid in said confined space exerting equal and opposite forces on said first and second sets of discs and said plate.

6. A turbine assembly as defined in Claim 5 which in addition includes:

i. first and second conduits (104, 106) that are connected to said first and second openings (100, 102), and a third conduit (108) into which said first and second conduits merge.

7. A turbine assembly as defined in Claim 6 that is used in conjunction with first and second spaced bore holes (B, E) that extend to a geothermal formation, said inlet opening in communication with said first bore hole (B) and receiving said multiphase fluid therefrom, and said third conduit (108) in communication with said second bore hole (E) to return said multiphase fluid to said geothermal formation.

8. A geothermal turbine assembly for use with at least one first bore hole (C) that extends to a geothermal formation from which a heated, pressurized multiphase fluid discharges that contains both steam and droplets of water entrained therewith and a second bore hole (E) through which said fluid may be returned to said geothermal formation, said geothermal turbine assembly having a housing (H), first and second bearing assemblies (62, 68) that are axially aligned and centered relative to said housing, said first bearing assembly (62) being supported on the interior of said shell, a shaft (72) that is rotatably supported by said first and second bearing assemblies and a power take-off (80) on said shaft exteriorly of said housing and shell, said assembly being characterized in that the second bearing assembly (68) is supported from an upright (66), in that the shaft (72) is cantilevered and in that the assembly further comprises:

a. a housing (H) that includes first and second laterally spaced side pieces (10, 12) and an end piece (14) extending therebetween, said first and second side pieces and end piece defining a confined space (22) therein; a circular rib (24) that is centered on said end piece and extends inwardly therefrom to subdivide said confined space into first and second outwardly disposed ring-shaped spaces; an inlet (56) in said end piece in communication with said first bore hole and said first and second ring-shaped spaces; and first and second fluid discharge openings (100, 102) that are centered in said first and second side pieces;

b. a hollow shell (60) secured to said first side piece (10) that extends over said discharge opening;

c. a base (64) that supports said hollow shell (60) and said housing thereabove;

d. a rotor plate (84) secured to said shaft (72) and disposed in said housing in vertical alignment with said rib (24);

e. first and second sets of spaced discs (90, 92) secured to opposite sides of said rotor plate (84) and vertically aligned with said first and second ring-shaped spaces, said first and second sets of discs having first and second centered openings (96, 98) therein;

f. a plurality of elongate nozzle bodies (J) disposed as first and second sets in said first and second ring-shaped spaces;

g. first means (40, 48) for pivotally supporting said nozzle bodies to permit each of said pairs thereof to define a converging space (50), a throat (52), and a diverging space (54) therebetween, said converging space in communication with said ring-shaped space most adjacent thereto, and said diverging space substantially tangentially disposed relative to the outer periphery of one of said discs, and each of said pairs of nozzle bodies capable of being pivotally adjusted so that the transverse cross-section of said converging and diverging spaces and said throat are so related that a jet of said fluid discharges onto one of said sets of discs at maximum velocity for the particular multiphase pressurized and heated fluid being used from said first bore hole;

h. second means (46, 47) for locking said nozzle bodies (J) in positions to produce said jets of fluid at said maximum velocity, said jets entering said spaces between said discs to impart rotational motion thereto as said jets lose velocity and increase in pressure to pursue spiral paths relative to said discs and discharge through said first and second openings therein and through said first and second discharge openings in said first and second side pieces;

i. a first conduit (104) connected to the interior of said shell, a second conduit (106) connected to said second discharge opening in said second side piece, and said first and second conduits merging into a third conduit (108) that intends to said second bore hole to return said fluid to said geothermal formation; and

j. sealing means that separate said confined space (22) from said first and second discharge openings in said first and second side pieces.

9. A geothermal turbine assembly as defined in Claim 8 which in addition includes:

k. a power driven pump (110) interposed in said third conduit (108) to return said fluid to said second bore hole (E) and maintain a minimum of pressure adjacent said first and second discharge openings in said first and second side pieces.

10. A geothermal turbine assembly as defined in Claim 8 which in addition includes:

l. an electric power generator (F) driven by said power take-off (80);

m. a fourth conduit (122) that extends from said first bore hole (C) to said fluid inlet in said end piece;

n. a normally open electrically operated valve (120) in said fourth conduit that moves towards a closed position as electric power is applied thereto; and

o. electrical conducting means (138, 140) that discharge electric power to said electrically operated valve when the magnitude of electric power produced by said generator rises above a predetermined magnitude.

**Patentansprüche**

1. Geothermische Turbinenbaugruppe des Typs mit einem einen begrenzten Raum (22) definierenden Gehäuse (H), einer drehbar im besagten Gehäuse gelagerten und quer durch den besagten begrenzten Raum verlaufenden Welle (70), einer Mehrzahl an der besagten Welle im besagten begrenzten Raum gelagerter beabstandeter Scheiben (90, 92); Einlassmitteln (56) in einem Aussenteil des besagten Gehäuses, durch welche ein unter Druck stehendes und erhitztes mehrphasige Fluid von einer geothermischen Quelle abgelassen werden kann, wobei das besagte Fluid Dampf und Wassertröpfchen enthält, und Ablassmitteln (104, 106) im besagten Gehäuse, durch welche das besagte mehrphasige Fluid nach Durchlaufen eines spiralförmigen Wegs in den besagten Räumen, um der besagten Welle aufgrund des Verlusts an kinetischer Energie an besagte Mehrzahl beabstandeter Scheiben Drehkraft zu verleihen, fliessen kann, wobei die besagte Turbinenbaugruppe dadurch gekennzeichnet ist, dass die Turbine eine Zentripetalflussturbine ist, wobei die besagte Mehrzahl Scheiben eine Mehrzahl darin angebrachter transversal ausgerichteter Mittelöffnungen (96, 98) besitzt, wobei die besagten Scheiben einen wesentlich geringeren Durchmesser als den des besagten begrenzten Raums besitzen; und dass das Einlassflügelsystem der besagten Turbine aus

a) einer Mehrzahl länglicher in überlappendem Verhältnis im besagten Gehäuse ausserhalb der besagten Scheiben angeordneter Düsenglieder (J), wobei jedes Paar der besagten Glieder zum Definieren eines zusammenlaufenden Raums (50) zusammenwirkt, einer Engstelle (52), und einem dazwischenliegenden auseinanderlaufenden Raum (54), wobei diese zusammenlaufenden Räume mit dem in den besagten begrenzten Raum abgelassenen besagten mehrphasigen Fluid in Verbindung stehen, und wobei die besagten auseinanderlaufenden Räume relativ zum Aussenumfang der besagten Scheiben im wesentlichen tangential angeordnet sind;

b) ersten Mitteln (48) für die drehbare Lagerung der besagten Düsenglieder am besagten Gehäuse, so dass die transversalen Querschnitte der besagten zusammenlaufenden Räume, Engstellen und auseinanderlaufenden Abschnitte auf Stellungen verändert werden können, wo das besagte mehrphasige Fluid mit maximaler Geschwindigkeit für ein jeweiliges mehrphasiges Fluid bekannten Drucks und bekannter Temperatur aus den besagten auseinanderlaufenden Oeffnungen abläuft; und

c) zweiten Mitteln (47) zum aufhebbaren Verriegeln der besagten Düsenglieder in festen Lagen relativ zueinander nach Drehung der besagten Düsenkörper in Stellungen, wo das besagte mehrphasige Fluid mit der besagten maximalen Geschwindigkeit aus den besagten auseinanderlaufenden Räumen abläuft, besteht.

2. Turbinenbaugruppe nach Anspruch 1, bei der sich erste und zweite Bohrlöcher (B, E) zu einer geothermischen Formation erstrecken, und wobei jenes erste Bohrloch in Verbindung mit den besagten Einlassmitteln (56) steht und dem besagten begrenzten Raum das besagte unter Druck stehende und erhitzte mehrphasige Fluid zuführt, und wobei die besagte Turbinenbaugruppe zusätzlich

d. eine mit den besagten Ablassmitteln (104, 106) verbundene und zum besagten zweiten Bohrloch verlaufende Rohrleitung (112), durch welche das besagte Fluid fliesst, um zur besagten geothermischen Formation zurücklaufen zu können, umfasst.

3. Turbinenbaugruppe nach Anspruch 2, zusätzlich umfassend

e. eine in der besagten Rohrleitung zwischen den besagten Ablassmitteln und dem besagten zweiten Bohrloch (E) angebrachte Motorpumpe (110) zum Fördern des besagten mehrphasigen Fluids zum besagten zweiten Bohrloch und zum Aufrechterhalten eines Mindestdrucks im besagten, dem besagten Ablassmittel benachbarten begrenzten Raum.

4. Turbinenbaugruppe nach Anspruch 2, zusätzlich umfassend

f. mit der besagten Welle verbundene drehbare Stromerzeugungsmittel (F) zum Erzeugen von elektrischem Strom bei Drehung der besagten Welle.

5. Turbinenbaugruppe nach Anspruch 1, zusätzlich umfassend

g. eine starr an der besagten Welle (72) befestigte und im besagten begrenzten Raum zentrierte Platte (84); und

h. erste Mittel (88), die die besagte Mehrzahl von Scheiben als erste und zweite Sätze einer gleichen Anzahl an gegenüberliegenden Seiten der besagten Platte tragen, wobei beide besagte Sätze mit jenem in den besagten begrenzten Raum durch die besagte Einlassöffnung abgelassenen mehrphasigen Fluid in Verbindung stehen, und wobei die besagten Ablassmittel aus ersten und zweiten Oeffnungen (100, 102) an gegenüberliegenden Teilen des besagten Gehäuses bestehen, durch welche das besagte mehrphasige Fluid nach Ablaufen durch die besagten zentrierten Oeffnungen in den besagten ersten und zweiten Sätzen von Platten fliesst, und wobei die besagte Welle im wesentlichen keinem Längsschub unterliegt, da das besagte mehrphasige Fluid im besagten begrenzten Raum gleiche und entgegengesetzte Kräfte auf die besagten ersten und zweiten Sätze von Scheiben und die besagte Platte ausübt.

6. Turbinenbaugruppe nach Anspruch 5, zusätzlich umfassend

i. erste und zweite Rohrleitungen (104, 106), die mit jenen ersten und zweiten Oeffnungen (100, 102) verbunden sind, und eine dritte Rohrleitung (108), in die die besagten ersten und zweiten Rohrleitungen einmünden.

7. Turbinenbaugruppe nach Anspruch 6, die in Verbindung mit ersten und zweiten beabstandeten, sich zu einer geothermischen Formation erstreckenden Bohrlöchern (B, E) benutzt wird, wobei die besagte Einlassöffnung in Verbindung mit dem besagten ersten Bohrloch (B) steht und daraus das besagte mehrphasige Fluid aufnimmt, und die besagte dritte Rohrleitung (108) in Verbindung mit dem besagten zweiten Bohrloch (E) steht, um das besagte mehrphasige Fluid zur besagten geothermischen Formation zurückzuführen.

8. Geothermische Turbinenbaugruppe zur Verwendung mit mindestens einem ersten Bohrloch (C), das sich zu einer geothermischen Formation erstreckt, aus der ein erhitztes, unter Druck stehendes mehrphasiges Fluid ausläuft, das sowohl Dampf als auch Wassertröpfchen mit sich führt, und einem zweiten Bohrloch (E), durch welches das besagte Fluid zur besagten geothermischen Formation zurückgeführt werden kann, wobei die geothermische Turbinenbaugruppe ein Gehäuse (H), erste und zweite axial ausgerichtete und relativ zum besagten Gehäuse zentrierte Lagerbaugruppen (62, 68), wobei diese erste Lagerbaugruppe (62) an der Innenseite der besagten Schale gelagert ist, eine drehbar durch besagte erste und zweite Lagerbaugruppen gelagerte Welle (72) und einen Abtrieb (80) an der besagten Welle ausserhalb des besagten Gehäuses und der Schale besitzt, wobei die besagte Baugruppe dadurch gekennzeichnet ist, dass die zweite Lagerbaugruppe (68) an einem Ständer (66) gelagert ist, dass die Welle (72) einseitig gelagert ist, und dass die Baugruppe weiterhin folgendes umfasst:

a. ein Gehäuse (H), das erste und zweite seitlich beabstandete Seitenstücke (10, 12) und ein dazwischenliegendes Endstück (14), wobei die besagten ersten und zweiten Seitenstücke und das Endstück einen darin liegenden begrenzten Raum (22) definieren; eine kreisförmige Rippe (24), die am besagten Endstück zentriert ist und sich von diesem nach innen erstreckt, um den besagten begrenzten Raum in erste und zweite aussen angeordnete ringförmige Räume zu unterteilen; einen in Verbindung mit dem besagten ersten Bohrloch und den besagten ersten und zweiten ringförmigen Räumen stehenden Einlass (56) im besagten Endstück; und erste und zweite Flüssigkeitsablassöffnungen (100, 102), die in den besagten ersten und zweiten Seitenstücken zentriert sind, enthält

b. eine hohle, am besagten ersten Seitenstück (10) befestigte Schale (60), die sich über die besagte Ablassöffnung erstreckt;

c. einen Sockel (64), der über sich die besagte hohle Schale (60) und das besagte Gehäuse trägt;

d. eine an der besagten Welle (72) befestigte und im besagten Gehäuse in senkrechter Ausrichtung mit der besagten Rippe (24) angeordnete Läuferplatte (84);

e. erste und zweite Sätze beabstandeter, an gegenüberliegenden Seiten der besagten Läuferplatte (84) befestigte und senkrecht zu den besagten ersten und zweiten ringförmigen Räumen ausgerichtete Scheiben (90, 92), wobei die besagten ersten und zweiten Sätze Scheiben darin angebrachte erste und zweite zentrierte Oeffnungen (96, 98) besitzen;

f. eine Mehrzahl länglicher, als erste und zweite Sätze in besagten ersten und zweiten ringförmigen Räumen angeordnete Düsenkörper (J);

g. erste Mittel (40, 48) für die drehbare Lagerung der besagten Düsenkörper, so dass jedes der besagten Paare derselben einen zusammenlaufenden Raum (50), eine Engstelle (52) und einen auseinanderlaufenden Raum (54) dazwischen definieren kann, wobei der besagte zusammenlaufende Raum mit dem ihm nächstliegenden ringförmigen Raum in Verbindung steht und der besagte auseinanderlaufende Raum relativ zum Aussenumfang einer der besagten Scheiben im wesentlichen tangential angeordnet ist und jedes der besagten Paare Düsenkörper drehbar einstellbar ist, so dass der transversale Querschnitt der besagten zusammenlaufenden und auseinanderlaufenden Räume und der besagten Engstelle in einem solchen Verhältnis zueinander stehen, dass ein Strahl des besagten Fluids mit maximaler Geschwindigkeit für das jeweilige mehrphasige unter Druck stehende und erhitzte, benutzte Fluid aus dem besagten ersten Bohrloch auf einen der besagten Sätze von Scheiben aufströmt;

h. zweite Mittel (46, 47) zum Verriegeln der besagten Düsenkörper (J) in Stellungen, in denen die besagten Fluidstrahlen mit besagter maximaler Geschwindigkeit erzeugt werden, wobei die besagten Strahlen in die besagten Räume zwischen den besagten Scheiben eintreten, um diesen eine Drehbewegung zu erteilen, wobei die besagten Strahlen an Geschwindigkeit verlieren und sich ihr Druck erhöht und sie relativ zu den besagten Scheiben Spiralwege verfolgen und durch darin befindliche besagte erste und zweite Oeffnungen und durch besagte erste und zweite Ablassöffnungen in den besagten ersten und zweiten Seitenstücken ablaufen;

i. eine erste, mit der Innenseite der besagten Schale verbundene Rohrleitung (104), eine zweite, mit der besagten zweiten Ablassöffnung im besagten zweiten Seitenstück verbundene Rohrleitung (106), und wobei die besagten ersten und zweiten Rohrleitungen in eine dritte Rohrleitung (108) einmünden, die sich zum besagten zweiten Bohrloch erstreckt, um das besagte Fluid zur besagten geothermischen Formation zurückzuführen; und

j. Dichtungsmittel, die den besagten begrenzten Raum (22) von den besagten ersten und zweiten Ablassöffnungen in besagten ersten und zweiten Seitenstücken trennen.

9. Geothermische Turbinenbaugruppe nach Anspruch 8, zusätzlich umfassend:

k. eine in die besagte dritte Rohrleitung (108) eingeführte Motorpumpe (110) zum Rückführen des besagten Fluids zum besagten zweiten Bohrloch (E) und zum Aufrechterhalten eines Mindestdrucks in der Nähe der besagten ersten und zweiten Ablassöffnungen in besagten ersten und zweiten Seitenstücken.

10. Geothermische Turbinenbaugruppe nach Anspruch 8, zusätzlich umfassend:

l. einen durch den besagten Abtrieb (80) angetriebenen elektrischen Stromgenerator (F);

m. eine vierte, sich vom besagten ersten Bohrloch (C) zum besagten Fluideinlass im besagten Endstück erstreckende Rohrleitung (122);

n. ein elektrisch betätigtes Schliessventil (120) in der besagten vierten Rohrleitung, das sich bei Anlegen von elektrischem Strom in eine geschlossene Stellung verstellt; und

o. elektrische Leitmittel (138, 140), die dem besagten elektrisch betätigten Ventil elektrischen Strom zuführen, wenn die Höhe der durch den besagten Generator erzeugten Leistung eine vorbestimmte Höhe überschreitet.

## Revendications

1. Une unité de turbine géothermique du type qui comprend un carter (H) qui délimite un espace confiné (22), un arbre (70) monté de façon rotative dans le dit carter et s'étendant transversalement à travers le dit espace confiné; une pluralité de disques espacés (90, 92) supportés par le dit arbre dans le dit espace confiné; des moyens d'admission (56) dans une portion extérieure du dit carter à travers lesquels peut être introduit un fluide polyphasique comprimé et chauffé provenant d'une source géothermique, le dit fluide contenant de la vapeur et des gouttelettes d'eau, ainsi que des moyens (104, 106) d'échappement faisant partie du dit carter à travers lesquels le dit fluide polyphasique peut s'écouler après avoir franchi une trajectoire spiralée dans les dits espaces pour imprimer une puissance rotative au dit arbre par suite de la cession de son énergie cinétique à la dite pluralité de disques espacés, la dite unité de turbine étant caractérisée en ce que la dite turbine est une turbine à écoulement centripète, la dite pluralité de disques présentant une pluralité d'ouvertures centrales (96; 98) alignées transversalement, les dits disques ayant un diamètre substantiellement plus petit que celui du dit espace confiné; et en ce que le système d'aubage d'admission de la dite turbine se compose de:

(a) une pluralité d'éléments de tuyère (J) montés avec recouvrement dans le dit carter, extérieurement aux dits disques, chaque paire des dits éléments coopérant pour délimiter entr'eux un espace convergent (50), un col (52) et un espace divergent (54), les dits espaces convergents étant en communication avec le dit fluide polyphasique introduit dans le dit espace confiné, et les dits espaces divergents étant disposés de façon substantiellement tangentielle par rapport à la périphérie extérieure des dits disques;

(b) des premiers moyens (48) pour supporter les dits éléments de tuyère de façon pivotable à partir du dit carter afin de pouvoir modifier les sections transversales des dits espaces convergents, cols et espaces divergents, jusqu'à des positions pour lesquelles le dit fluide polyphasique sort des dites ouvertures divergentes avec une vitesse maximum pour un fluide polyphasique particulier ayant une pression et une température connues; et

(c) des seconds moyens (47) pour verrouiller, de façon amovible, les dits éléments de tuyère dans des positions fixes l'un par rapport à l'autre après que les dits éléments de tuyère aient été amenés par pivotement en des positions pour lesquelles le dit fluide polyphasique sort avec la dite vitesse maximum des dits espaces divergents.

2. Une unité de turbine telle que définie dans la revendication 1, dans laquelle les premier et deuxième trous de forage (B, E) s'étendent jusqu'à une formation géothermique, et le dit premier trou de forage étant en communication avec les dits moyens d'admission (56) et fournissant le dit fluide polyphasique comprimé et chauffé au dit espace confiné, et la dite unité de turbine comprenant en outre:

(d) un conduit (112) raccordé aux dits moyens d'échappement (104, 106) et s'étendant jusqu'au dit deuxième trou de forage à travers lequel le dit fluide s'écoule pour être renvoyé à la dite formation géothermique.

3. Une unité de turbine telle que définie dans la revendication 2, qui comprend en outre:

(e) une pompe mécanique (110) montée dans le dit conduit entre les dits moyens d'échappement et le dit deuxième trou de forage (E) pour renvoyer le dit fluide polyphasique vers le dit deuxième trou de forage et pour maintenir une pression minimum dans le dit espace confiné adjacent aux dits moyens d'échappement.

4. Une unité de turbine telle que définie dans la revendication 2, qui comprend en outre:

(f) des moyens tournants de production d'électricité (F) reliés au dit arbre pour produire du courant électrique lorsque le dit arbre est en rotation.

5. Une unité de turbine telle que définie dans la revendication 1, qui comprend en outre:

(g) une plaque (84) fixée rigidement au dit arbre (72) et centrée dans le dit espace confiné; et

(h) des premiers moyens (88) qui supportent la dite pluralité de disques sous la forme d'un premier et d'un second jeu de nombre égal sur les deux côtés de la dite plaque, les dits deux jeux étant en communication avec le dit fluide polyphasique introduit dans le dit espace confiné à travers la dite ouverture d'admission et les dits moyens d'échappement étant constitués par une première et une deuxième ouverture (100, 102) dans des faces opposées du dit carter, à travers lesquelles le dit fluide polyphasique s'écoule après avoir été introduit à travers les dites ouvertures centrales ménagées dans les dits premier et deuxième jeux de disques, et le dit arbre n'étant soumis à substantiellement aucune poussée longitudinale grâce au fait que le dit fluide polyphasique présent dans le dit espace confiné exerce des efforts égaux et opposés sur les dits premier et deuxième jeux de disques et la dite plaque.

6. Une unité de turbine telle que définie dans la revendication 5, qui comprend en outre:

(i) des premier et deuxième conduits (104, 106) qui sont raccordés aux dites première et deuxième ouvertures (100, 102), ainsi qu'un troisième conduit (108) dans lequel se réunissent les dits premier et deuxième conduits.

7. Une unité de turbine telle que définie dans la revendication 6, qui est utilisée en combinaison avec des premier et deuxième trous de forage (B, E) espacés qui s'étendent jusqu'à une formation géothermique, la dite ouverture d'admission étant en communication avec le dit premier trou de forage (B) et en recevant le dit fluide polyphasique, et le dit troisième conduit (108) étant en communication avec le dit deuxième trou de forage (E) pour renvoyer le dit fluide polyphasique vers la dite formation géothermique.

8. Une unité de turbine géothermique à utiliser avec au moins un premier trou de forage (C) qui s'étend jusqu'à une formation géothermique d'où provient un fluide polyphasique chauffé et comprimé contenant à la fois de la vapeur et des gouttelettes d'eau entraînées, et avec un deuxième trou de forage (E) à travers lequel le dit fluide peut être renvoyé à la dite formation géothermique, la dite unité de turbine géothermique comportant un carter (H), un premier et un deuxième ensemble de palier (62, 68) qui sont axialement alignés et centrés par rapport au dit carter, le dit premier ensemble de palier (62) étant supporté à l'intérieur de la dite enveloppe, un arbre (72) qui est supporté de façon rotative par les dits premier et deuxième ensembles de palier, et une prise de puissance (80) sur le dit arbre à l'extérieur des dits carter et enveloppe, la dite unité étant caractérisée en ce que le deuxième ensemble de palier (68) est supporté par un étai (66), en ce que l'arbre (72) est en porte-à-faux et en ce que l'unité comprend en outre:

(a) un carter (H) qui comporte une première et une seconde pièce latérale (10, 12) latéralement espacées et une pièce d'extrémité (14) s'étendant entr'elles, les dites première et seconde pièces latérales et pièce d'extrémité délimitant un espace confiné (22); une nervure circulaire (24) qui est centrée sur la dite pièce d'extrémité et s'étend à partir de celle-ci vers l'intérieur pour diviser le dit espace confiné en un premier et un second espace annulaire disposé vers l'extérieur; une entrée (56) dans la dite pièce d'extrémité en communication avec le dit premier trou de forage et les dits premier et second espaces annulaires; et des première et deuxième ouvertures (100, 102) d'échappement du fluide, qui sont centrées dans les dites première et deuxième pièces latérales;

(b) une enveloppe creuse (60) fixée à la dite première pièce latérale (10), qui s'étend sur la dite ouverture d'échappement;

(c) une base (64) qui supporte la dite enveloppe creuse (60) et le dit carter situé au-dessus;

(d) une plaque de rotor (84) fixée au dit arbre (72) et disposée dans le dit carter en alignement vertical avec la dite nervure (24);

(e) des premier et second jeux de disques espacés (90, 92) fixés aux faces opposées de la dite plaque de rotor (84) et alignés verticalement avec les dits premier et second espaces annulaires, les dits premier et second jeux de disques présentant des première et deuxième ouvertures (96, 98) centrales;

(f) une pluralité d'éléments de tuyère (J) allongés disposés sous la forme d'un premier et d'un second jeu dans les dits premier et deuxième espaces annulaires;

(g) des premiers moyens (40, 48) pour supporter les dits éléments de tuyère de façon pivotable, afin de permettre aux dites paires de ceux-ci de délimiter entr'eux un espace convergent (50), un col (52) et un espace divergent (54), le dit espace convergent étant en communication avec le dit espace annulaire qui lui est le plus proche, et le dit espace divergent étant disposé de façon substantiellement tangentielle par rapport à la périphérie extérieure de l'un des dits disques, et chacune des dites paires d'éléments de tuyère pouvant être positionnée, par ajustement pivotant, de telle façon que la section transversale des des dits espaces convergent et divergent et du dit col soit réglée de manière telle qu'un jet du dit fluide vienne frapper un des dits jeux de disques avec une vitesse maximum pour le fluide polyphasique particulier comprimé et chauffé utilisé provenant du dit premier trou de forage;

(h) des deuxièmes moyens (46, 47) pour verrouiller, de façon amovible, les dits éléments de tuyère (J) dans des positions produisant les dits jets de fluide à la dite vitesse maximum, les dits jets pénétrant dans les dits espaces entre les dits disques pour leur imprimer un mouvement de rotation pendant que les dits perdent de la vitesse, mais gagnent en pression pour poursuivre des trajectoires spiralées par rapport aux dits disques et sortir à travers les dites première et deuxième ouvertures dans ces disques et à travers les dites première et deuxième ouvertures d'échappement dans les dites première et deuxième pièces latérales;

(i) un premier conduit (104) raccordé à l'intérieur de la dite enveloppe, un deuxième conduit (106) raccordé à la dite ouverture d'échappement dans la dite deuxième pièce latérale, et les dits premier et deuxième conduits se réunissant en un troisième conduit (108) qui tend vers le dit deuxième trou de forage pour renvoyer le dit fluide vers la dite formation géothermique; et

(j) des moyens d'étanchéité qui séparent le dit espace confiné (22) des dites première et deuxième ouvertures d'échappement dans les dites première et deuxième pièces latérales.

9. Une unité de turbine géothermique telle que définie dans la revendication 8, qui comprend en outre:

(k) une pompe mécanique (110) montée dans le dit troisième conduit (108) pour renvoyer le dit fluide vers le dit deuxième trou de forage (E) et maintenir une pression minimum au voisinage des dites première et deuxième ouvertures d'échappement dans les dites première et deuxième pièces latérales.

10. Une unité de turbine géothermique telle que définie dans la revendication 8, qui comprend en outre:

(l) un générateur de courant électrique (F) entraîné par la dite prise de puissance (80);

(m) un quatrième conduit (122) qui s'étend depuis le dit premier trou de forage (C) jusqu'à la dite entrée de fluide dans la dite pièce d'extrémité;

(n) une électro-vanne (120) normalement ouverte dans le dit quatrième conduit, qui se met en position fermée lorsqu'un courant électrique lui est appliqué; et

(o) des moyens de conduite de l'électricité (138, 140) qui alimentent la dite électro-vanne en courant électrique lorsque le niveau de la puissance électrique produite par le dit générateur dépasse une valeur prédéterminée.

FIG. 1

FIG. 2

FIG.3

FIG.4

# FIG. 5